# EUROPÄISCHE PATENTSCHRIFT

(11) **EP 3 233 601 B1**
(45) Veröffentlichungstag und Bekanntmachung des Hinweises auf die Patenterteilung: **28.08.2019**
(21) Anmeldenummer: 15810622.9
(22) Anmeldetag: 16.12.2015
(51) Int. Cl.: F16F 15/14, B60W 30/20, F16F 15/30, B60W 10/08, F02N 11/04, B60W 20/00, F02B 75/06, F04C 2/08, F15B 11/08, F04C 2/34, B60W 20/17, F02B 63/04, F16F 15/00

(54) **AKTUATORANORDNUNG ZUM AUFBRINGEN EINES DREHMOMENTS AUF EINE WELLE, INSBESONDERE EINE KURBELWELLE EINER HUBKOLBENMASCHINE, UND EIN ENTSPRECHENDES VERFAHREN**
ACTUATOR ARRANGEMENT FOR APPLYING A TORQUE TO A SHAFT, IN PARTICULAR A CRANKSHAFT OF A RECIPROCATING PISTON ENGINE, AND A CORRESPONDING METHOD
DISPOSITIF D'ACTIONNEMENT DESTINÉ À APPLIQUER UN COUPLE À UN ARBRE, NOTAMMENT UN VILEBREQUIN D'UN MOTEUR À PISTONS ALTERNATIFS ET PROCÉDÉ CORRESPONDANT

(30) Priorität: 18.12.2014 DE 102014119085
(43) Veröffentlichungstag der Anmeldung: 25.10.2017
(73) Patentinhaber: Hasse & Wrede GmbH, 12681 Berlin (DE)
(72) Erfinder: STEIDL, Michael, 10318 Berlin (DE); CABON, Thierry, 14513 Teltow (DE); MALI, Markus, 16548 Glienicke/Nordbahn (DE); KNOPF, Florian, 14199 Berlin (DE)
(74) Vertreter: Specht, Peter
(86) Internationale Anmeldenummer: PCT/EP2015/079923
(87) Internationale Veröffentlichungsnummer: WO 2016/096941

(56) Entgegenhaltungen:
- DE-A1- 10 304 559
- DE-A1- 19 532 129
- DE-A1-102007 043 737
- DE-A1-102011 084 092
- DE-A1-102013 100 964
- US-A- 5 823 282

## Beschreibung

Die Erfindung betrifft eine Aktuatoranordnung zum Aufbringen eines Drehmoments auf eine Welle einer Maschine, insbesondere eine Kurbelwelle einer Hubkolbenmaschine. Die Erfindung bezieht sich auch auf ein entsprechendes Verfahren.

Wellen von Maschinen, z.B. Kurbelwellen von Hubkolbenmaschinen, weisen aufgrund intermittierender Antriebsmomente Drehungleichförmigkeiten auf, welche als Drehschwingungen bzw. Torsionsschwingungen bekannt sind.

Derartige Drehschwingungen können durch passive Systeme, wie z.B. Drehschwingungsdämpfer (so genannte Visco-Dämpfer mit einem viskosen Medium), welche einen Schwungring aufweisen, reduziert werden. Dazu geben die Dokumente EP 1266152B1, US 6,026,709A, US 5,637,041 A Beispiele an.

Die DE10 2010 046 849 B4 beschreibt eine sensorbasierte Regelung von Schwingungen in schlanken Kontinua, speziell Torsionsschwingungen in Tiefbohrsträngen. Es wird eine Theorie zur Berechnung von laufenden Wellen anhand von zwei Messpunkten angegeben.

Weitere aktive Systeme zur Schwingungsdämpfung mit einem Aktuator sind aus der DE 195 32 129 A1 und der DE 103 04 559 A1 bekannt. In der letztgenannten Schrift wirkt ein Aktuator auf ein Getriebe eines Antriebsstranges eines Fahrzeugs, das über ein Zweimassenschwungrad einer Kurbelwelle einer Hubkolbenmaschine nachgeschaltet ist. Derart kann aber - aufgrund der entkoppelnden Wirkung des Zweimassenschwungrades - keine Schwingungsreduzierung- oder -anregung von Schwingungen der Kurbelwelle erfolgen.

Die WO 2014/118245 A1 beschreibt ein aktives System zur Schwingungsdämpfung mit einem Aktuator. Die Welle der WO 2014/118245 A1 ist eine Kurbelwelle der Hubkolbenmaschine, die ein Frontende und ein Abtriebsende aufweist. Die Hubkolbenmaschine kann z.B. ein Diesel-, Benzin-, oder Gasmotor sein und unterschiedlichen Zwecken dienen, beispielsweise als Fahrzeugantrieb. Die Kurbelwelle kann - vorzugsweise an einem Abtriebsende - ein Schwungrad - beispielsweise einen Zweimassenschwungrad - aufweisen, dem ein Antriebsstrang z.B. eines Fahrzeugs nachgeschaltet ist, welches ein Antriebsgetriebe aufweist.

Ein Aufbringen eines Drehmoments auf eine Welle einer Verbrennungsmaschine wird zum Starten der Maschine üblicherweise mittels eines Anlassers vorgenommen. Bei Hybridmaschinen in Fahrzeugen kann auch der Elektromotor der Hybridmaschine dazu verwendet werden. Zum Bremsen kann dieser Elektromotor in einen Generatorbetrieb geschaltet werden, wobei der Elektromotor dann als Generator elektrische Energie erzeugt.

Es besteht ein ständiger Bedarf an effektiven Dämpfungsvorrichtungen, um nicht nur die Lebensdauer der schwingungsbehafteten Teile zu verlängern, sondern auch gleichzeitig Wartungskosten zu senken.

Daher besteht die Aufgabe der vorliegenden Erfindung darin, eine verbesserte Aktuatoranordnung und ein verbessertes Verfahren zum Aufbringen eines Drehmoments auf eine Welle einer Maschine zu bereitzustellen.

Die Aufgabe wird durch eine Aktuatoranordnung mit den Merkmalen des Anspruchs 1 und durch ein Verfahren mit den Merkmalen des Anspruchs 25 gelöst.

Demgemäß umfasst eine erfindungsgemäße Aktuatoranordnung zum Aufbringen eines Drehmoments auf eine Welle einer Maschine, insbesondere einer Hubkolbenmaschine, a) mindestens eine Aktuatoreinrichtung zum Aufbringen des Drehmoments, und b) mindestens eine mit der Welle gekoppelte, drehbare seismische Masse, c) wobei die mindestens eine Aktuatoreinrichtung zum Aufbringen des Drehmoments zwischen der seismischen Masse und der Welle ausgelegt ist.

Eine "seismische" Masse ist eine physikalische Masse, welche hier in ihrer Ausbildung, z.B. als Schwungring, Anordnung und Kopplung zu einer "seismischen" Masse wird, die aus der Schwingungsmesstechnik bekannt ist. Dabei ist die seismische Masse als Schwungrad oder/und Schwungring mit einem drehbaren Körper, hier eine Welle, verbunden und rotiert mit diesem mit gleicher Drehzahl. Ein Massenträgheitsmoment I einer solchen seismischen Masse liegt bei einem PKW in einem Bereich von z.B. 0,01 bis 0,5 kgm², bei einem Nutzfahrzeug in einem Bereich von z.B. 0,1 bis 3 kgm², bei einer stationären Maschine (EPG) in einem Bereich von z.B. 3 bis 100 kgm² und bei einer großen Zweitaktverbrennungsmaschine in einem Bereich von z.B. 100 bis 35000 kgm². Die seismische Masse bildet in Bezug auf die Welle ein quasi absolutes Bezugssystem, gegenüber welchem sich Drehzahldifferenzen zur Welle, die z.B. durch Drehschwingungen verursacht durch einen Wellenantrieb, z.B. eine Hubkolbenmaschine, verursacht werden. Vorzugsweise ist daher die Welle eine Kurbellwelle einer Hubkolbenmaschine und die mindestens eine Aktuatoreinrichtung ist zum Aufbringen des Drehmoments zwischen der seismischen Masse und der Kurbellwelle der Hubkolbenmaschine ausgelegt.

Der Vorteil der mitdrehenden seismischen Masse liegt in den kleinen Relativgeschwindigkeiten zwischen der Welle und der seismischen Masse. Mit anderen Worten, die Relativgeschwindigkeit zwischen der Welle und der seismischen Masse resultiert nur aus der der gleichförmigen Drehung von Welle und seismischer Masse überlagerten Drehschwingung. Unter dem Begriff der Geschwindigkeit ist hier die Drehgeschwindigkeit zu verstehen.

Ein erfindungsgemäßes Verfahren zum Aufbringen eines Drehmoments auf eine Welle einer Maschine, insbesondere einer Kurbelwelle einer Hubkolbenmaschine, insbesondere mit der erfindungsgemäßen Aktuatoranordnung, umfasst die Verfahrensschritte (S1) Erfassen einer Drehmomentanforderung; (S2) Bestimmen von Ansteuerungsdaten für die mindestens eine elektrische Maschine anhand der erfassten Drehmomentanforderung; und (S3) Aufbringen des Drehmoments auf die Welle durch Ansteuern der mindestens einen elektrischen Maschine zum Antreiben der mindestens einen Aktuatoreinrichtung.

Die erfindungsgemäße Aktuatoreinrichtung eignet sich besonders zur Dämpfung von Drehschwingungen der Welle, wobei das erfindungsgemäße Verfahren zum aktiven Dämpfen von Drehschwingungen der Welle der Maschine in dem Verfahrensschritt (S1) ein Erfassen von Drehschwingungsinformationen der Welle mit der mindestens einen Messeinrichtung vorsieht, in dem Verfahrensschritt (S2) ein Bestimmen von Ansteuerungsdaten für die mindestens eine elektrische Maschine anhand der erfassten Eingangsdaten vorsieht, und in dem Verfahrensschritt (S3) ein aktives Dämpfen der Drehschwingungen der Welle durch Ansteuern der mindestens einen elektrischen Maschine zum Antreiben der mindestens einen Aktuatoreinrichtung vorsieht.

Auf diese Weise weist die erfindungsgemäße Aktuatoreinrichtung den bedeutenden Vorteil auf, dass sie verschiedene Anwendungen in dem Aufbringen des Drehmoments auf die Welle kombinieren kann. So kann das Aufbringen des Drehmoments für einen Beschleunigungsvorgang, z.B. Startvorgang eines Motors, welchem die Welle zugeordnet ist, für einen Bremsvorgang und zur Dämpfung von Drehschwingungen der Welle Verwendung finden.

In einer weiteren Ausführung ist die Aktuatoranordnung zum Aufbringen eines wechselnden Drehmoments auf die Welle ausgebildet. Unter dem Begriff eines "wechselnden Drehmoments" ist folgendes zu verstehen.

Bei einem wechselnden Drehmoment durchquert der Verlauf des Drehmoments die Nulllinie von positiven Werten zu negativen Werten und umgekehrt. Dieser Verlauf kann natürlich auch periodisch, gedämpft oder ungedämpft oder auch in bestimmten Zeitabschnitten aufschaukelnd sein. Ein solches wechselndes Drehmoment wird insbesondere zur Dämpfung von Drehschwingungen der Welle auf diese aufgebracht

Würde das Drehmoment zur Dämpfung der Drehschwingungen zwischen der sich drehenden Welle und einem feststehenden Bezugspunkt aufgebracht, wäre die dissipierte Leistung bei einem viskosen Dämpfer sehr hoch, da dieser auch die gleichförmige Drehbewegung abbremsen würde.

Soll ein aktives System mit einem Aktuator wie im Stand der Technik beschrieben zur Dämpfung von Drehschwingungen der Welle zum Einsatz kommen, wäre ein mögliche Variante für einen Aktuator der Einsatz eines Elektromotors mit festem Stator und einem an der mit Drehschwingungen beaufschlagten Welle befestigten Rotor. Als nachteilig wird dabei gesehen, dass der Elektromotor eine sehr große nominale Leistung benötigt. Diese errechnet sich zu P=Mω mit dem benötigten Drehmoment M und der Winkelgeschwindigkeit ω der Welle. Da das benötigte wechselnde Drehmoment zur Dämpfung der Drehschwingungen bei Verbrennungsmotoren typischerweise in der Größenordnung des Nennmoments des Verbrennungsmotors liegt, müsste der Aktuator eine Nennleistung in der Größenordnung des Verbrennungsmotors aufweisen. Dies ist nur bei Spezialanwendungen (Hybrid, Generator) denkbar. Bei einem mit der Geschwindigkeit der Welle mitdrehenden Rotor müsste jedoch die zur Versorgung des Aktuators benötigte Energie berührungslos übertragen werden.

Zur Reduzierung von Drehschwingungen bzw. zur Erzeugung von Drehschwingungen kann auf eine sich drehende Welle ein definiertes wechselndes Drehmoment aufgebracht werden. Aus der Regel "Actio gleich Reactio" ergibt sich, dass dieses Drehmoment abgestützt werden muss. Hierzu gibt es die Lösungsvorschläge, a) dieses Drehmoment gegenüber einem raumfesten Punkt oder b) an einer mitdrehenden seismischen Masse abzustützen.

Wenn der Aktuator dieses Drehmoments z.B. ein Elektromotor wäre, so wäre bei a) der Stator des Elektromotors raumfest und bei b) der Stator des Elektromotors an der mitdrehenden seismischen Masse befestigt.

Bei a) besteht das Problem, dass die momentane abgegebene Motorleistung P(t) sehr hoch sein kann. Wenn sich die Welle mit einer Winkelgeschwindigkeit dreht und ein aufzubringendes wechselndes Drehmoment einen bestimmten Wert besitzt, kann eine momentane Leistung P(t) im Mittelwert zwar Null betragen, aber der Elektromotor muss trotzdem entsprechend groß dimensioniert werden.

Hierzu sei ein Beispiel angegeben. Zur Schwingungsreduktion an einer Kurbelwelle einer LKW-Verbrennungsmaschine soll ein wechselndes Drehmoment von 2 kNm bei einer Drehzahl von 1800 1/min aufgebracht werden. Daraus resultiert eine Amplitude der momentanen Leistungsabgabe des Elektromotors von ca. 377 kW. Ein geeigneter Elektromotor ist groß, schwer und teuer.

Im Fall b) existiert dieses Problem nicht, da ja Stator und Rotor des Elektromotors durch die mitdrehende seismische Masse sich fast gleich schnell drehen. Eine großer Nachteil hierbei ist aber die elektrische Versorgung des Elektromotors durch Schleifringe (Verschleiß, Wartung) bzw. induktive Verfahren. Zudem muss auch hier der Aktuator (im Beispiel ein Elektomotor) das wechselndes Drehmoment von 2 kNm aufbringen, wodurch sich wieder ein entsprechend großer und teurer Elektromotor als nachteilig ergibt.

Die Erfindung löst im Gegensatz dazu die beschriebene Problematik zur Vermeidung der beschriebenen Nachteile von a) und b) auf folgende Weise mit a) mindestens einer Aktuatoreinrichtung zum Aufbringen eines insbesondere zur Dämpfung von Drehschwingungen der Welle dienenden Drehmoments, und b) mindestens einer mit der Welle gekoppelten, drehbaren seismischen Masse, c) wobei die mindestens eine Aktuatoreinrichtung zum Aufbringen des Drehmoments zur Dämpfung von Drehschwingungen der Welle zwischen der seismischen Masse und der Welle ausgelegt ist.

Das Drehmoment zur Dämpfung von Drehschwingungen der Welle wird zwischen der seismischen Masse und der Welle durch die mindestens eine Aktuatoreinrichtung aufgebracht. Diese bildet bzw. realisiert vorzugsweise eine Kopplung der seismischen Masse mit der Welle. Auf diese Weise kann das zur Anregung oder Reduzierung von Drehschwingungen der Welle auf die Welle aufzubringende Drehmoment auf einfache Weise in geeigneter Form aufgebracht werden.

Eine Ausführung sieht vor, dass die drehbare seismische Masse derart mit der Welle gekoppelt ist, dass die drehbare seismische Masse mit gleicher Drehzahl der Welle rotiert. Auf diese Weise kann das zur Dämpfung von Drehschwingungen der Welle auf die Welle aufzubringende Drehmoment klein gehalten werden. Es ist aber auch denkbar, dass je nach Betriebszustand einmal das Mitdrehen mit gleicher Geschwindigkeit und ein anderes mal ein Mitdrehen mit unterschiedlicher Drehzahl auftreten.

Die Aktuatoranordnung weist mindestens eine elektrische Maschine zur Bereitstellung von Antriebsenergie für die mindestens eine Aktuatoreinrichtung auf. Eine elektrische Maschine kann in einfacher Weise in kompakter Bauform realisiert werden.

In einer Ausführung weist die Akturatoranordnung mindestens ein Getriebe auf, durch welches die mindestens eine Aktuatoreinrichtung für ihren Antrieb mit der mindestens einen elektrischen Maschine gekoppelt ist. Ein Getriebe eröffnet besonders viele Optionen, jeweils für den einzelnen Anwendungsfall in besonders geeigneter Weise, wechselnde Drehmomente auf eine rotierende Welle aufzubringen.

In einer weiteren Ausführung sind das mindestens eine Getriebe und die mindestens eine Aktuatoreinrichtung an der mindestens einen seismischen Masse angeordnet. Dies ergibt einen kompakten Aufbau.

Es ist vorgesehen, dass das Getriebe ein Gehäuse aufweist, welches mit der seismischen Masse fest verbunden ist. Dadurch wird vorteilhaft erreicht, dass eine Übersetzung des Getriebes zwischen der Drehzahl der seismischen Masse und der elektrischen Maschine für eine Reduzierung von Drehzahl und Antriebsleistung der elektrischen Maschine erzielt werden kann. Ein solches Gehäuse kann z.B. Lagerstellen und/oder Befestigungen für für Getriebebauteile bilden. Das Getriebe kann dadurch als eine Einheit einfach eingebaut und bei Wartung leicht ausgetauscht werden. Außerdem wird damit ein kompakter Aufbau ermöglicht.

In einer weiteren Ausführung weisen die drehbare seismische Masse und die elektrische Maschine zusammen mit der Welle eine gleiche Drehachse auf, woraus sich ein einfacher Aufbau ergibt.

Dadurch ergibt sich der Vorteil, dass die Leistung der elektrischen Maschine relativ klein (bei einem LKW-Motor ca. 5 kW) gehalten werden kann, wobei ein benötigter Bauraum ebenfalls relativ gering ausfällt.

Hierbei ist in einer Ausführung vorgesehen, dass die mindestens eine elektrische Maschine als ein Elektromotor mit einem Stator und einem Rotor ausgebildet ist, wobei der Stator fest an einem Rahmen angebracht und der Rotor mit der mindestens einen Aktuatoreinrichtung mittelbar durch das Getriebe oder unmittelbar gekoppelt ist. Der Elektromotor kann in einer Ausführung für eine Drehzahl von ± 16 000 U/min ausgebildet sein. Damit ist eine hochdynamische Regelung in Abhängigkeit des aktuellen Zustands der zugehörigen Maschine, z.B. eine Hubkolbenverbrennungsmaschine, möglich.

Der Stator des Elektromotors ist fest am Rahmen, z.B. am Rahmen der Hubkolbenverbrennungsmaschine, angebracht. Der Rotor treibt die auf der mit der gleichförmigen Wellengeschwindigkeit mitdrehenden seismischen Masse befindlichen Aktuatoreinrichtung an.

In einer Ausführung ist das Getriebe ein Zahnradgetriebe, wobei die mindestens eine Aktuatoreinrichtung durch ein Ausgangsrad des Getriebes gebildet ist, und wobei ein Getriebeeingang mit dem Rotor der mindestens einen elektrischen Maschine gekoppelt ist. Zahnräder können als Bauteile mit hoher Qualität gefertigt werden und ermöglichen einen relativ einfachen Aufbau.

In einer alternativen Ausführung weist das Getriebe mindestens einen Generator und mindestens einen elektrischen Motor auf, wobei der mindestens eine elektrische Motor die mindestens eine Aktuatoreinrichtung bildet, und wobei der mindestens eine Generator mit dem Rotor der mindestens einen elektrischen Maschine gekoppelt ist. Eine "Getriebeübersetzung" lässt sich hier vorteilhaft durch Auslegung der jeweiligen elektrischen Maschine in relativ einfacher Weise mit wenigen beweglichen Bauteilen realisieren.

In einer bevorzugten Ausführung weist das Getriebe mindestens eine Pumpe, die als Hydraulikpumpe, insbesondere als Zahnradpumpe, ausgebildet ist, und die mindestens eine Aktuatoreinrichtung auf, wobei die Pumpe mit dem Rotor der mindestens einen elektrischen Maschine gekoppelt ist, und wobei die mindestens eine Aktuatoreinrichtung als ein radial angeordneter Hydraulikzylinder der Pumpe, als Verdrängerflügel oder als Zahnradpumpe ausgebildet ist.

In einer Ausführung ist die mindestens eine Aktuatoreinrichtung ein Hydraulikzylinder einer Pumpe, die eine Hydraulikpumpe ist, ist, wobei die Pumpe auf der seismischen Masse angeordnet und mit dem Rotor der mindestens einen elektrischen Maschine gekoppelt ist. Die seismische Masse und somit die Pumpe rotieren mit der gleichförmigen Wellendrehgeschwindigkeit, wobei das Drehmoment zur Dämpfung durch relative Beschleunigung zwischen der seismischen Masse und der Welle erzeugt wird. Hierdurch bleibt die Leistung der elektrischen Maschine wie oben schon erwähnt relativ gering.

In einer alternativen Ausführung kann die mindestens eine Aktuatoreinrichtung ein oder mehrere Piezoelemente bzw. Piezoaktuatoren aufweisen, wobei das Getriebe mindestens einen Generator zur Energieversorgung des einen oder der mehreren Piezoelemente aufweist und auf der seismischen Masse angeordnet ist, und mit dem Rotor der mindestens einen elektrischen Maschine gekoppelt ist.

Die Ankopplung der seismischen Masse an die Welle kann z.B. nur wie oben beschrieben durch die mindestens eine Aktuatoreinrichtung erfolgen, oder in einer weiteren Ausführung ausgebildet sein, wobei die mindestens eine drehbare seismische Masse weiterhin über eine Federeinheit mit der Welle gekoppelt ist. Die Federeinheit kann parallel geschaltete Federn, wie z.B. Drehfedern, oder am Umfang verteilte Schraubenfedern aufweisen. Die seismische Masse ist dabei über die Federeinheit sowie über Zylinder der Hydraulikpumpe mit einem Frontend der Welle verbunden bzw. gekoppelt.

Die Hydraulikzylinder bzw. die Piezoaktuatoren können eine definierte Verschiebung (definierte Beschleunigung bzw. definiertesDrehmoment) zwischen der seismischen Masse zur Welle realisieren.

In einer weiteren Ausführung weist die Aktuatoranordnung eine Einrichtung zum Bremsen der Welle auf. Dabei kann die Einrichtung zum Bremsen der Welle die mindestens eine elektrische Maschine zur Energierückgewinnung umfassen. Z.B. kann die rückgewonnene elektrisch Energie in einer Fahrzeugbatterie bzw. in einem zusätzlichen elektrischen Energiespeicher gespeichert werden.

In einer noch weiteren Anordnung ist vorgesehen, dass die Aktuatoranordnung eine Einrichtung zum Beschleunigen der Welle aufweist, wobei die mindestens eine elektrische Maschine Beschleunigungsvorgänge erzeugt. Hiermit kann z.B. bei Startvorgängen und/oder anderen Betriebszuständen der zu der Welle zugehörigen Maschine Unterstützungshilfen gegeben werden.

In einer weiteren Ausführung weist die Aktuatoranordnung mindestens ein Steuergerät zur Steuerung der elektrischen Maschine und mindestens eine Messeinrichtung zur Erfassung von Drehschwingungsinformationen der Welle auf, wobei das Steuergerät zur Steuerung der elektrischen Maschine anhand der durch die Messeinrichtung erfassten Drehschwingungsinformationen der Welle zum Aufbringen des Drehmoments zur Dämpfung von Drehschwingungen der Welle ausgebildet ist. Dadurch wird eine vorteilhaft einfache zentrale Steuerung für die Aktuatoranordnung ermöglicht, wobei durch die Messeinrichtung die notwendigen aktuellen Messwerte zu den Drehschwingungen der Welle erfasst und schnell verarbeitet werden können. Damit kann das Steuergerät die elektrische Maschine derart steuern, dass die elektrische Maschine die Aktuatoreinrichtung so antreibt, dass die Aktuatoreinrichtung das Drehmoment zur Dämpfung von Drehschwingungen der Welle auf die Welle aufbringt, um eine genaue und präzise Drehschwingungsdämpfung (oder auch Drehschwingungserzeugung) der Welle zu ermöglichen.

Außerdem kann das Steuergerät der Aktuatoranordnung eine Regeleinheit zur Bereitstellung einer überlagerten Drehgeschwindigkeitsregelung der seismischen Masse aufweisen. Damit wird vorteilhaft erreicht, dass eine momentane gleichförmige Drehgeschwindigkeit der seismischen Masse gleich der momentanen gleichförmigen Drehgeschwindigkeit der angekoppelten Welle ist.

In einer Ausführung des Verfahrens ist im Verfahrensschritt (S1) ein gleichzeitiges Übernehmen von zusätzlichen Informationen von einer Motorsteuerung (16) der zuzuordnenden Maschine vorgesehen. Der Betriebszustand der Welle mit der dazugehörigen Maschine bzw. Hubkolbenmaschine kann anhand von Daten der Drehzahl und Winkellage der Kurbelwelle sowie der aktuellen Belastung der Maschine erfasst werden, wodurch eine Dämpfung von Drehschwingungen der Welle weiter verbessert werden kann.

Im Verfahrensschritt (S3) wird ein Drehmoment zur Dämpfung von Drehschwingungen der Welle zwischen der Welle und der sich mit der Welle mitdrehenden seismischen Masse von der mindestens einen Aktuatoreinrichtung durch relatives Beschleunigen zwischen der seismischen Masse und der Welle erzeugt wird. Dadurch ergibt sich bei den kleinen Relativgeschwindigkeiten ein relativ kleines aufzubringendesDrehmoment.

Die Erfindung wird nun anhand eines Ausführungsbeispiels mit Bezug auf die beigefügten Zeichnungen näher erläutert. Hierbei zeigt:
- Fig. 1: eine schematische Darstellung eines Ausführungsbeispiels einer erfindungsgemäßen Aktuatoranordnung;
- Fig. 2: eine schematische Darstellung einer Variante des Ausführungsbeispiels nach Fig. 1;
- Fig. 3-5: schematische Schnittdarstellungen von Varianten eines Getriebes des Ausführungsbeispiels nach Fig. 1; und
- Fig. 6: ein schematisches Flussdiagramm eines erfindungsgemäßen Verfahrens.

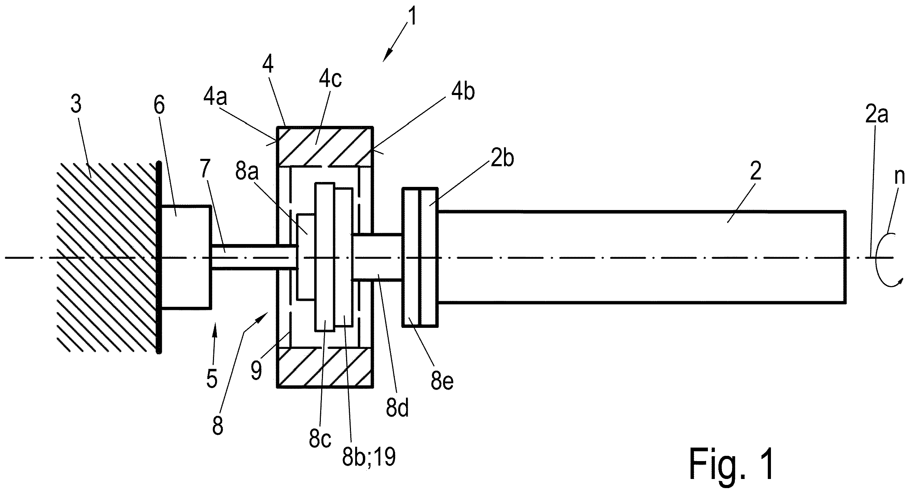

In Fig. 1 ist eine schematische Darstellung eines Ausführungsbeispiels einer erfindungsgemäßen Aktuatoranordnung 1 gezeigt.

Die Aktuatoranordnung 1 ist mit einer Welle 2 einer nicht gezeigten Maschine, z.B. eine Hubkolbenmaschine, dargestellt. Die Welle 2 ist hier eine Kurbelwelle der Hubkolbenmaschine, die ein Frontende und ein Abtriebsende aufweist. Die Hubkolbenmaschine kann z.B. ein Diesel-, Benzin-, oder Gasmotor sein und unterschiedlichen Zwecken dienen, beispielsweise als Fahrzeugantrieb. Die Kurbelwelle kann - vorzugsweise an einem Abtriebsende - ein Schwungrad - beispielsweise einen Zweimassenschwungrad - aufweisen, dem ein Antriebsstrang z.B. eines Fahrzeugs nachgeschaltet ist, welcher ein Antriebsgetriebe aufweist. Ein Antriebsgetriebe ist ein Getriebe, z.B. ein Fahrzeuggetriebe, welches die Motordrehzahl auf eine Antriebsdrehzahl übersetzt.

Die Welle 2 dreht sich dabei mit einer (veränderlichen) Drehzahl n um ihre Längsachse, die hier als Drehachse 2a bezeichnet ist.

Die Aktuatoranordnung 1 ist zum Aufbringen eines Drehmoments auf die Welle 2 vorgesehen und umfasst die Welle 2, eine seismische Masse 4, eine elektrische Maschine 5, ein Getriebe 8 und mindestens eine Aktuatoreinrichtung 19. Mit der Aktuatoranordnung 1 und deren Aktuatoreinrichtung 19 werden vorzugsweise ergänzende wechselnde Drehmomente auf die bereits durch die laufende Hubkolbenmaschine in Drehung befindliche Kurbelwelle 2 aufgebracht, die insbesondere schwingungsanregend oder -dämpfend wirken können. Dieses Aufbringen ergänzender Drehmomente erfolgt vorzugsweise direkt an der Kurbelwelle vor dem Antriebsstrang mit dem ggf. vorgesehenen Schwungrad.

Die seismische Masse 4 ist als eine Art Schwungrad mit einer Antriebsseite 4a und einer Koppelseite 4b ausgebildet. In dem gezeigten Beispiel ist die seismische Masse mit einem Schwungring 4c geformt. Beispielhafte Durchmesser der seismischen Masse 4 liegen in einem Bereich von 0,15 m bis 3,50 m. Der Werkstoff der seismischen Masse 4 ist z.B. Grauguss, Stahlguss, Stahl oder/und Wolfram.

Die elektrische Maschine 5 ist als ein Elektromotor mit einem Stator 6 und einem Rotor 7 ausgebildet. Der Stator 6 ist raumfest und hier fest an einem Rahmen 3 angebracht. Der Rahmen 3 kann z.B. bei einem Fahrzeug dessen Rahmen sein. Bei einer Standmaschine kann der Rahmen 3 z.B. deren Rahmen oder Fundament sein. Der Rotor 7 ist mit der mindestens einen Aktuatoreinrichtung 19 zu deren Antrieb direkt oder indirekt gekoppelt.

Die seismische Masse 4 und die elektrische Maschine 5 weisen hier zusammen mit der Welle 2 die gleiche Drehachse 2a auf. Es ist auch möglich, dass sie unterschiedliche Drehachsen oder annähernd gleiche Drehachsen aufweisen.

Das Getriebe 8 umfasst einen Getriebeeingang 8a, einen Getriebeausgang 8b, eine Zwischenstufe 8c und ein Gehäuse 9. Das Getriebe 8 ist ein Drehmomentwandler.

Der Getriebeeingang 8a liegt auf der Antriebsseite 4a der seismischen Masse 4 und ist mit dem Rotor 7 der elektrischen Maschine gekoppelt. Der Getriebeausgang 8b ist über die Zwischenstufe 8c in einem bestimmten Übersetzungsverhältnis mit dem Getriebeeingang 8a gekoppelt. Zudem umfasst hier der Getriebeausgang 8b die mindestens eine Aktuatoreinrichtung 19, welche an der Koppelseite 4b der seismischen Masse 4 über eine Ausgangswelle 8d und einen Koppelabschnitt 8e, z.B. ein Flansch, mit einem Frontend 2b der drehenden Welle 2, auf welche ein wechselndes Drehmoment aufgebracht werden soll, gekoppelt ist. Das Gehäuse 9 des Getriebes 8 stützt sich gegen die mit der drehenden Welle 2 mitdrehende seismische Masse 4 ab. Das Gehäuse 9 ist hier nur schematisch gestrichelt angedeutet. Das Getriebe 8 wird unten noch näher beschrieben.

Die Aktuatoranordnung 1 ist so ausgebildet, dass sie ein Drehmoment auf die Welle 2 aufbringt. Ein solches Drehmoment kann zu unterschiedlichen Zwecken aufgebracht werden. So kann die Aktuatoranordnung 1 nicht nur zur Dämpfung von Drehschwingungen der Welle 2 verwendet werden, sondern auch einerseits die Welle 2 und somit einen bei einem Fahrzeug vorhandenen mit der Welle 2 gekoppelten gesamten Antriebsstrang in einem Rekuperationsbetrieb abbremsen und andererseits die Welle 2, z.B. zum Start der zugehörigen Verbrennungsmaschine, beschleunigen.

Es soll nun ein Zahlenbeispiel zur Drehschwingungsreduktion der Welle 2 angegeben werden. Die Welle 2 ist z.B. eine Kurbelwelle eines LKW Motors. Bei einer Drehzahl n der Welle 2 von 1800 1/min soll ein wechselndes Drehmoment von 2 kNm auf die Welle 2 aufgebracht werden. Eine beispielhaftes Übersetzungsverhältnis des Getriebes 8 sei 1:10. Dann beträgt das von der relativ kleinen elektrischen Maschine 5 aufzubringende wechselndes Drehmoment nur noch 200 Nm. Da das Gehäuse 9 des Getriebes 8 mit der seismischen Masse 4 mit umläuft, dreht die Eingansseite des Getriebes 8, d.h. der Getriebeeingang 8a, auch nur mit der Drehzahl 1800 1/min. Wäre im Gegensatz dazu das Gehäuse 9 des Getriebes 8 raumfest, dann würde der Getriebeeingang 8a mit einer Drehzahl von 18000 1/min drehen.

In dem beispielhaften Fall mit der Getriebeübersetzung von 1:10 beträgt nun die von der elektrischen Maschine 5 abgegebene Leistungsamplitude nur noch 37,7 kW (im Gegensatz zu 377 kW ohne die Getriebeübersetzung 1:10).

Auf diese Weise werden durch diese Anordnung also sowohl der Leistungsbedarf als auch das Drehmoment der elektrischen Maschine 5 um die Getriebeübersetzung reduziert.

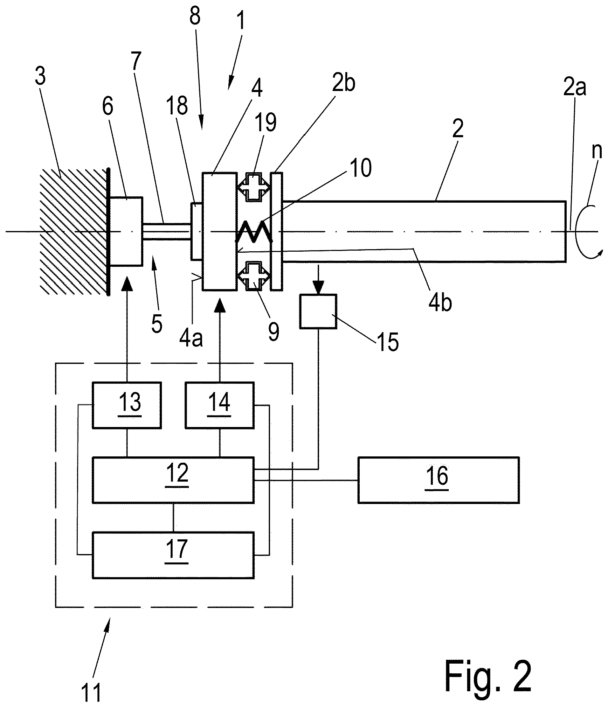

Fig. 2 zeigt eine schematische Darstellung einer Variante des Ausführungsbeispiels nach Fig. 1, wobei das Getriebe 8 mit einer Pumpe 18 und Aktuatoren 19 ausgebildet ist. Der Getriebeeingang 8a (siehe Fig. 1) wird durch einen Antriebseingang der Pumpe 18 gebildet. Die Zwischenstufe 8c ist durch die Pumpen- und Aktuatorkonstruktion gegeben. Der Getriebeausgang 8b sind die Koppelstellen der Aktuatoren 19 mit dem Frontend 2b der Welle 2.

Zudem ist ein Steuergerät 11 dargestellt, dessen Funktion unten noch näher erläutert wird.

In dieser gezeigten Variante ist die seismische Masse 4 an der zur Welle 2 weisenden Koppelseite 4b über die Aktuatoren 19 und eine Federeinheit 10 mit dem Frontend 2b der Welle 2 gekoppelt und rotiert auf diese Weise mit gleicher Drehgeschwindigkeit wie die Welle 2.

Die Federeinheit 10 ist eine Option und kann aus parallel geschalteten Federn bestehen, wie z.B. Drehfedern oder am Umfang verteilte Schraubenfedern. Natürlich können auch andere Federanordnungen in Betracht kommen.

Es ist auch möglich, dass die Ankopplung der seismischen Masse 4 an das Frontend 2b der Welle 2 nur über die Aktuatoren 19 realisiert ist, was hier nicht dargestellt ist.

Ein auf die Welle 2 aufzubringendes Drehmoment wird zwischen der Welle 2 und der Koppelseite 4b der sich mitdrehenden seismischen Masse 4 von den Aktuatoren 19 aufgebracht. Das benötigte Drehmoment wird durch relative Beschleunigung zwischen der seismischen Masse 4 und der Welle 2 erzeugt. Hierdurch bleibt die benötigte Leistung zur Erzeugung des benötigten Drehmoments klein, da die Relativgeschwindigkeit zwischen der seismischen Masse 4 und der Welle 2 klein bleibt. In einem beispielhaften Fall eines LKW-Motors beträgt die dazu erforderliche Leistung, z.B. bei Dämpfung von Drehschwingungen der Welle 2, etwa 5 kW.

Die benötigte Energie, mit welcher die Aktuatoren 19 zum Erzeugen dieses Drehmoments beaufschlagen werden, wird durch die elektrische Maschine 5 von der Antriebsseite 4a der seismischen Masse 4 her geliefert. Der Rotor 7 ist mit den Aktuatoren 9 zu deren Antrieb gekoppelt.

Die elektrische Maschine ist als ein hochdrehender Elektromotor mit der geforderten, jedoch kleinen Leistung (z.B. 5 kW bei einem LKW-Motor) realisiert. Dieser hochdrehende Elektromotor kann z.B. eine Drehzahl von ± 16 000 U/min aufweisen. Es kann auch beispielsweise ein Torquemotor als elektrische Maschine 5 Verwendung finden.

In dem gezeigten Beispiel ist ein Antrieb der Aktuatoren 19 durch die Pumpe 18 gebildet. Die Pumpe 18 ist auf der seismischen Masse 4 angebracht und in diesem Beispiel als eine hochdynamische Hydraulikpumpe ausgebildet. Dabei können die Aktuatoren 19 Zylinder der als Hydraulikpumpe ausgebildeten Pumpe 18 sein. Der Rotor 7 der elektrischen Maschine ist mit der Pumpe 18 antriebsmäßig gekoppelt und treibt die auf der seismischen Masse 4 angebrachte, mit dieser und der Welle 2 mit gleichförmiger Wellengeschwindigkeit (Drehgeschwindigkeit der Welle 2) mitdrehende Pumpe 18 an.

Der Rotor 7 treibt die Pumpe 18 direkt an. Die Zylinder der hochdynamischen Hydraulikpumpe können eine definierte Verschiebung (definierte Beschleunigung bzw. definiertes Drehmoment) zwischen der seismischen Masse 4 zur Welle 2 realisieren.

Anstelle der Pumpe 18 kann auch ein Generator auf der seismischen Masse 4 angeordnet sein, was hier nicht gezeigt aber vorstellbar ist. Dabei können die Aktuatoren 19 beispielsweise Piezoelemente sein, die mit elektrischer Energie von diesem Generator beaufschlagt werden.

Die gleichförmige Drehzahl der Maschine, z.B. eines Verbrennungsmotors, d.h. der Welle 2, ist hierbei unproblematisch, da die hochdrehende elektrische Maschine 5 aufgrund ihrer sehr kurzen Ansprechzeit und ihres wesentlich größeren Drehzahlbereichs die benötigte Drehzahl additiv zu der gleichförmigen Drehzahl n der Welle 2 aufbringen kann.

Das Steuergerät 11 weist eine Steuereinrichtung 12, eine Motorsteuerung 13 für die elektrische Maschine 5 und eine Regeleinheit 14 für die seismische Masse 4 auf. Weiterhin kann das Steuergerät 11 eine oder mehrere übergelagerte Regeleinrichtungen 17 zur Realisierung weiterer Funktionen, wie z.B. Rekuperation (Generatorbetrieb der elektrischen Maschine 5), zusätzliche Beschleunigung der Welle 2 u.a. umfassen.

Die Steuereinrichtung 12 des Steuergerätes 11 steht hier außerdem mit mindestens einer Messeinrichtung 15 und einem Motorsteuergerät 16 der Maschine, welche der Welle 2 zugeordnet ist, in Verbindung.

Die Messeinrichtung 15 erfasst Drehschwingungen der Welle 2 und kann z.B. wie in dem Dokument WO 2014/118245 A1 beschrieben aufgebaut sein. Die so erfassten Daten werden an die Steuereinrichtung 12 übermittelt.

Weitere Daten über die Welle 2, z.B. Drehzahl n, einschließlich Daten von Betriebszuständen der Maschine erhält die Steuereinrichtung 12 von dem Motorsteuergerät 16, das mit der Maschine verbunden ist. Zu den Daten von Betriebszuständen der Maschine können auch Drehmomentanforderungen für die Welle 2 gehören, wie z.B. Abbremsen oder Beschleunigen des Fahrzeugs, wie Starten der Maschine.

Die Steuereinrichtung 12 bereitet diese Eingangsdaten für die Motorsteuerung 13 derart auf, dass die Motorsteuerung 13 entsprechende Ausgangsdaten zur Steuerung und Regelung der elektrischen Maschine an diese ausgibt. Damit ist eine hochdynamische Regelung in Abhängigkeit des aktuellen Zustands der Maschine, z.B. Verbrennungsmaschine, möglich. Zur Regelung gehören auch Daten der elektrischen Maschine 5, die während ihres Betriebs erfasst und an die Motorsteuerung 13 übertragen werden.

Die Ansteuerung der elektrischen Maschine 5 mit Regelung der Drehschwingungen, d.h. der Dämpfung von Drehschwingungen der Welle 2, kann z.B. über einen Algorithmus zur aktiven Schwingungsdämpfung erfolgen, welcher in dem Dokument WO 2014/118245 A1 beschrieben ist, worauf hier Bezug genommen wird.

Mit dieser Anordnung kann mithilfe von Aktuatoren 19 geringer Leistung unter Nutzung des seismischen Prinzips mit der seismischen Masse 4 das Drehmoment zur Dämpfung von Drehschwingungen der Welle 2 bereitgestellt werden.

Die Massen bzw. zusätzlichen Trägheiten des Rotors 7 der elektrischen Maschine 5 sowie der auf der seismischen Masse 4 angebrachten Pumpe 18 einschließlich Aktuatoren 19 sind hierbei nicht störend, da eine höhere seismischen Masse 4 die benötigten Verschiebungen durch aufzubringende Drehmomente zur Dämpfung von Drehschwingungen verkleinert.

Die Aufgabe der Regeleinheit 14 besteht darin, eine überlagerte Drehgeschwindigkeitsregelung der seismischen Masse 4 so bereitzustellen, dass eine momentane gleichförmige Drehgeschwindigkeit der seismischen Masse 4 gleich der momentanen gleichförmigen Drehgeschwindigkeit der Welle 2 ist.

Die Aktuatoranordnung 1 kann neben der Dämpfung von Drehschwingungen der Welle 2 gleichzeitig auch dazu verwendet werden, den gesamten Antriebsstrang bei einem zuzuordnenden Fahrzeug abzubremsen (Rekuperation) bzw. auch zu beschleunigen (z.B. beim Start der Maschine). Hierzu ist die bereits oben erwähnte Regeleinrichtung 17 vorgesehen. Im Falle eines Abbremsens der Welle 2 kann z.B. die elektrische Maschine 5 als Generator zur Rekuperation wirken, d.h. elektrische Leistung erzeugen, die z.B. in der Fahrzeugbatterie gespeichert wird.

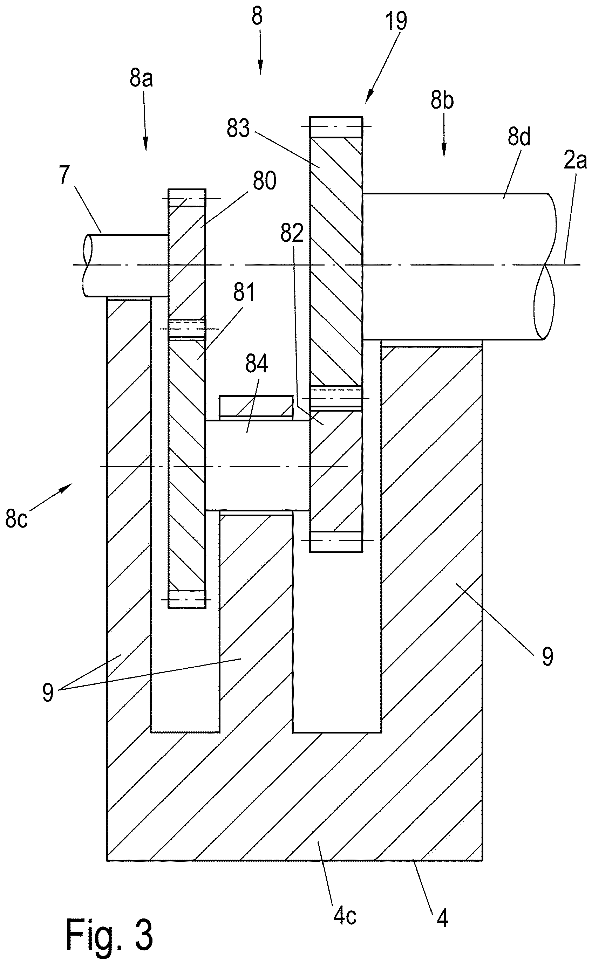

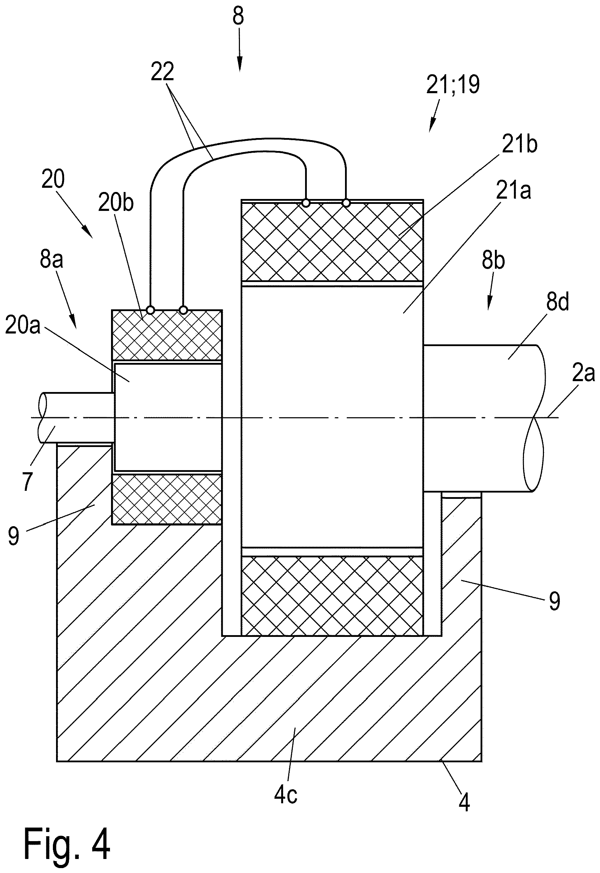

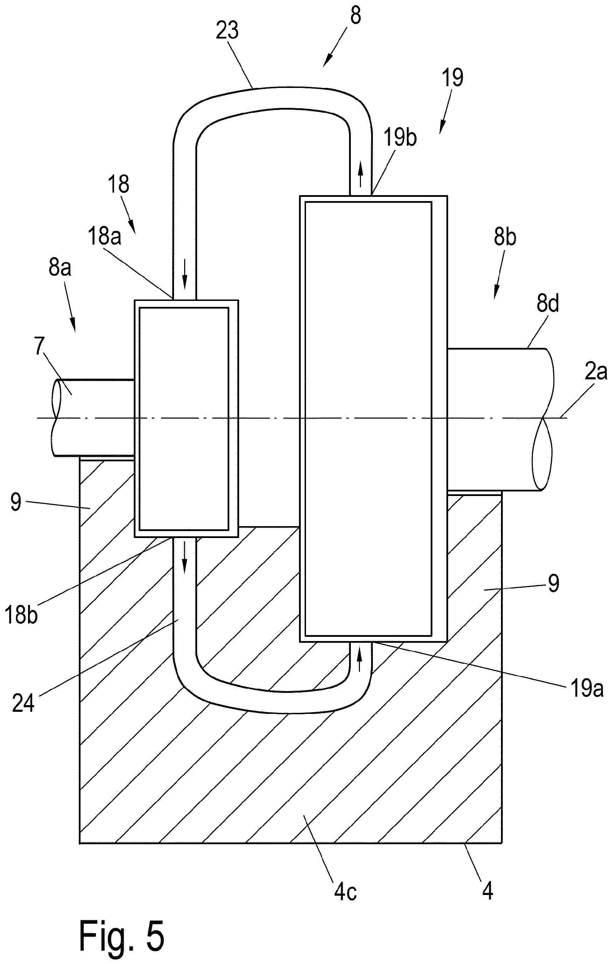

In Fig. 3 - 5 sind schematische Schnittdarstellungen von Varianten des Getriebes 8 des Ausführungsbeispiels nach Fig. 1 dargestellt. Fig. 3 zeigt das Getriebe 8 als Zahnradgetriebe. In Fig. 4 ist das Getriebe 8 als ein elektromotorisches Getriebe gezeigt, und Fig. 5 stellt ein schematisches Hydraulikgetriebe dar.

Die seismische Masse 4 ist in Fig. 3 - 5 jeweils im Längsschnitt nur zur Hälfte gezeigt, die andere Hälfte ist jeweils leicht vorstellbar. Abschnitte des Körpers der seismischen Masse 4 sind hier als Abschnitte des Gehäuses 9 des Getriebes 8 ausgebildet und mit dem umlaufenden Schwungring 4c und somit mit der seismischen Masse 4 fest verbunden.

Der Rotor 7 der elektrischen Maschine 5 (siehe Fig. 1) ist als Getriebeeingang 8a in einem zur elektrischen Maschine 5 weisenden Abschnitt des Gehäuses 9 drehbar gelagert und an ihrem ins Gehäuse 9 hervorstehenden Ende mit einem Eingangsrad 80 drehfest versehen.

In ähnlicher Weise ist die Ausgangswelle 8d als Getriebeausgang 8b in einem zur Welle 2 weisenden Abschnitt des Gehäuses 9 drehbar gelagert. An ihrem ins Gehäuse 9 hervorstehenden Ende ist ein Ausgangsrad 83 drehfest angebracht.

In dieser Variante bildet das Ausgangsrad 83 die mindestens eine Aktuatoreinrichtung 19.

Zwischen den beiden Gehäuseabschnitten ist ein weiterer Abschnitt des Gehäuses 9 angeordnet, welcher eine Lagerstelle für eine Zwischenwelle 84 der Zwischenstufe 8c bildet. Die Zwischenwelle 84 ist an ihrem zum Getriebeeingang 8a weisenden Ende mit einem ersten Zwischenrad 81 und an ihrem anderen Ende mit einem zweiten Zwischenrad 82 versehen. Die Zwischenräder 81 und 82 sind mit der Zwischenwelle 84 drehfest verbunden. Das erste Zwischenrad 81 steht mit dem Eingangsrad 80 in Eingriff, wobei das zweite Zwischenrad 82 mit dem Ausgangsrad 83 in Eingriff steht.

Das Getriebe 8 ist somit als Zahnradgetriebe mit der Zwischenstufe 8c zur Bildung einer bestimmten Übersetzung zwischen dem Getriebeeingang 8a und dem Getriebeausgang 8b ausgeführt. Die Räder 80, 81, 82, 83 sind hier Zahnräder mit einer Stirnradverzahnung, z.B. eine Gerad- oder Schrägverzahnung. Natürlich sind auch andere Verzahnungsarten möglich. Das Getriebe 8 ist hier nur schematisch dargestellt und kann z.B. ein Planetengetriebe sein.

Die Variante nach Fig. 4 zeigt ein Getriebe 8, welches als elektromotorisches Getriebe mit einem Generator 20 und einem elektrischen Motor 21 ausgebildet ist.

Das Gehäuse 9 des Getriebes 8 wird auch hier durch Abschnitte der seismischen Masse 4 gebildet und ist mit dem Schwungring 4c fest verbunden. Der Rotor 7 ist in dem Getriebeeingang 8a in dem zugehörigen Gehäuseabschnitt drehbar gelagert. Ebenso bildet ein zugehöriger Gehäuseabschnitt eine Lagerstelle für die Ausgangswelle 8d im Getriebeausgang 8b.

Der Generator 20 weist hier einen Rotor 20a, z.B. als Innenläufer mit Permanentmagneten, auf, der mit dem Ende des Rotors 7 der elektrischen Maschine 5 im Getriebeeingang 8a drehfest verbunden ist. Der Rotor 20a ist innnerhalb eines im Gehäuse 9 angeordneten Stators 20b drehbar angeordnet.

Der Motor 21 weist einen Rotor 21a und einen im Gehäuse 9 angebrachten Stator 21b auf. Das in das Gehäuse 9 hervorstehende Ende der Ausgangswelle 8d ist mit dem Rotor 21a des Motors 21 drehfest verbunden. Dieser Rotor 21a ist beispielsweise auch ein Innenläufer mit Permanentmagneten und innerhalb des Stators 21b des Motors 21 drehbar angeordnet.

Der Stator 20b des Generators 20 weist eine Wicklung auf, welche mit einer Wicklung des Stators 21b des Motors 21 elektrisch leitend über eine Verbindung 22 verbunden ist. Diese Verbindung ist nur schematisch angegeben, natürlich können spezielle Generator-/Motorsteuerungen zur Steuerung bzw. Regelung von Generator 20 und Motor 21 vorgesehen sein.

Eine Zwischenstufe 8c des Getriebes 8 ist hier nicht dargestellt. Sie wird durch die mechanische und elektrische Auslegung von Generator 20 und Motor 21 gebildet, wobei auch die oben erwähnten Generator-/Motorsteuerungen Verwendung finden.

Der Motor 21 bildet die mindestens eine Aktuatoreinrichtung 19.

Fig. 5 stellt ein schematisches Hydraulikgetriebe ähnlich wie in Fig. 2 als Getriebe 8 dar. Diese Ausführung des Getriebes 8 mit einer Pumpe 18 und einer Aktuatoreinrichtung 19 ist besonders bevorzugt, wenn hohe und schnelle wechselndes Drehmomente übertragen werden.

Das Gehäuse 9 ist wieder Bestandteil der seismischen Masse 4 und bildet Lagerstellen sowohl im Getriebeeingang 8a für den Rotor 7 der elektrischen Maschine 5 als auch im Getriebeausgang 8b für die Ausgangswelle 8d. Notwendige Dichtungen sind hier nicht gezeigt, aber selbstverständlich notwendig.

Im Getriebeeingang 8a ist der Rotor 7 mit der Pumpe 18 drehfest gekoppelt. Die Pumpe 18 kann z.B. eine handelsübliche Zahnradpumpe sein und weist einen Einlass 18a und einen Auslass 18b für ein Pumpmedium, z.B. ein spezielles Öl, auf.

Die Aktuatoreinrichtung 19 kann z.B. ein radial angeordneter Hydraulikzylinder sein, von dem auch mehrere vorhanden sein können. Es ist auch möglich, dass die Aktuatoreinrichtung 19 als Verdrängerflügel oder auch als Zahnradpumpe ausgeführt ist. Die Aktuatoreinrichtung 19 weist einen Einlass 19a und einen Auslass 19b für das Pumpmedium auf.

Die Aktuatoreinrichtung 19 ist auf ihrer Seite des Getriebeausgangs 8b mit der Ausgangswelle 8d drehfest verbunden, z.B. derart, dass der/die Verdrängerflügel und das Abtriebszahnrad mit der Ausgangswelle 8d gekoppelt sind.

Der Einlass 18a der Pumpe 18 ist über eine erste Verbindungsleitung 23 mit dem Auslass 19b der Aktuatoreinrichtung 19 verbunden. Eine zweite Verbindungsleitung 24 verbindet den Auslass 18b der Pumpe 18 mit dem Einlass 19a der Aktuatoreinrichtung 19. Die Verbindungsleitungen 23, 24 dienen zur Leitung des Pumpmediums und sind für die bei Betrieb des Getriebes 8 auftretenden hohen Mediendrücke geeignet, wobei sie entsprechende Querschnitte aufweisen. Die Verbindungsleitungen 23, 24 sind in dem Gehäuse 9 angeordnet, bzw. in dieses eingeformt.

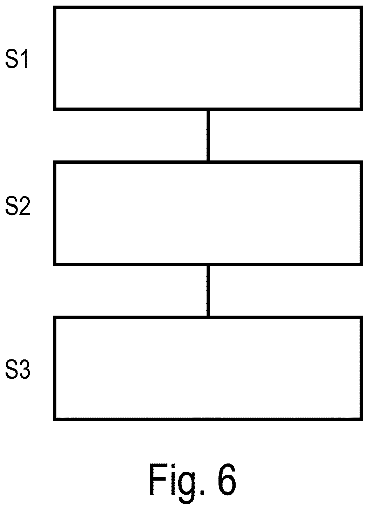

Fig. 6 zeigt ein schematisches Flussdiagramm eines beispielhaften erfindungsgemäßen Verfahrens zum Aufbringen eines Drehmoments auf die Welle 2 der zuzuordnenden Maschine, insbesondere Hubkolbenmaschine.

In einem ersten Verfahrensschritt S1 werden Eingangsdaten mit einer Drehmomentanforderung erfasst. Eine solche Drehmomentanforderung kann z.B. ein Startvorgang des Motors, ein Bremsvorgang, eine Beschleunigungsanforderung beim Gasgeben, eine Dämpfungsanforderung zum Dämpfen von Drehschwingungen der Welle 2 u.dgl. sein.

Dies erfolgt z.B. dadurch, dass die Steuereinrichtung 11 von dem Motorsteuergerät 16 oder/und von der Messeinrichtung 15 entsprechende Befehle bzw. Datensätze erhält.

In einem zweiten Verfahrensschritt S2 werden Ansteuerungsdaten für die elektrische Maschine 5 anhand der erfassten Eingangsdaten der Drehmomentanforderung vorgenommen.

Schließlich wird die elektrische Maschine 5 in einem dritten Verfahrensschritt S3 anhand der so bestimmten Ansteuerungsdaten zum Antrieb der Pumpe 18 bzw. des Generators 20 zum Erzeugen von Drehmomenten zum Aufbringen eines Drehmoments auf die Welle 2 durch die Aktuatoren 19 oder durch den Motor 21 bzw. am jeweiligen Getriebeausgang 8b angesteuert.

Das aufzubringende Drehmoment kann unterschiedliche Verläufe aufweisen.

So kann ein Drehmoment, welches beispielsweise für einen Startvorgang oder/und eine Beschleunigung auf die Welle 2 aufgebracht wird, von einem Nullpunkt aus auf einen bestimmten positiven Wert ansteigen, der z.B. für eine bestimmte Zeitdauer auch konstant bleiben kann, und dann wieder abnehmen und zu Null werden.

Bei einem Bremsvorgang wird das Drehmoment negativ, d.h. es verläuft von dem Nullpunkt zu negativen Werten hin, wobei es natürlich auch konstant bleiben kann, und von dort wieder zum Nullpunkt.

Natürlich können diese Drehmomentverläufe auch wiederkehrend oder periodisch verlaufen.

Auch ein wechselndes Drehmoment ist möglich, wobei der Verlauf des Drehmoments dabei die Nulllinie von positiven Werten zu negativen Werten und umgekehrt durchqueren kann. Dieser Verlauf kann natürlich auch periodisch, gedämpft oder ungedämpft oder auch in bestimmten Zeitabschnitten aufschaukelnd sein. Ein solches wechselndes Drehmoment wird insbesondere zur Dämpfung von Drehschwingungen der Welle 2 auf diese aufgebracht.

In dem Fall einer Dämpfung von Drehschwingungen der Welle 2 werden zunächst in dem ersten Verfahrensschritt S1 Messdaten der Messeinrichtung 15 mit Drehschwingungsinformationen der Welle 2 erfasst und die Drehschwingungsinformationen ausgewertet. Gleichzeitig erfolgt eine Übernahme von Eingangsdaten von der Motorsteuerung 16 mit Informationen hinsichtlich Drehzahl, Winkellage usw. der Welle 2.

In dem zweiten Verfahrensschritt S2 werden Ansteuerungsdaten für die elektrische Maschine 5 anhand der erfassten Eingangsdaten vorgenommen. Dabei wird z.B. der Algorithmus zur aktiven Schwingungsdämpfung verwendet, welcher in dem Dokument WO 2014/118245 A1 beschrieben ist.

Schließlich wird die elektrische Maschine 5 in dem dritten Verfahrensschritt S3 anhand der so bestimmten Ansteuerungsdaten zum Antrieb der Pumpe 18 bzw. des Generators 20 zum Erzeugen von Drehmomenten zur Drehschwingungsdämpfung der Welle 2 durch die Aktuatoren 19 oder durch den Motor 21 bzw. am jeweiligen Getriebeausgang 8b zum aktiven Dämpfen der Drehschwingungen der Welle 2 angesteuert. Dabei wird das Drehmoment zur Dämpfung von Drehschwingungen der Welle 2 zwischen der Welle 2 und der sich mitdrehenden seismischen Masse 4 von den Aktuatoreinrichtungen 19, dem Motor 21 bzw. am Getriebeausgang 8b aufgebracht. Das Drehmoment zur Dämpfung von Drehschwingungen der Welle 2 wird durch relatives Beschleunigen zwischen der seismischen Masse 4 und der Welle 2 erzeugt.

Die Erfindung wird nicht durch das oben beschriebene Ausführungsbeispiel eingeschränkt, sondern ist im Rahmen der beigefügten Ansprüche modifizierbar.

So ist es denkbar, dass die seismische Masse 4 mit einer weiteren Messeinrichtung versehen, die mit ihrer Regeleinheit 14 zusammenwirkt.

Eine Erfassung einer Winkellage der Welle 2 kann auch in der Messeinrichtung 15 erfolgen.

Weiterhin ist es denkbar, dass die elektrische Maschine 5, der Generator 20 und/oder der elektrische Motor 21 als so genannte Außenläufer ausgebildet sein können.

Es ist außerdem denkbar, dass die Aktuatoranordnung 1 auch zum Dämpfen von Drehschwingungen bei Wellen anderer Maschinen als Hubkolbenmaschinen einsetzbar ist. Beispielsweise kann die Aktuatoranordnung 1 bei Maschinen, deren Betriebszustände als quasi-stationär angenommen werden können, Verwendung finden.

### Bezugszeichenliste

- 1: Aktuatoranordnung
- 2: Kurbelwelle
- 2a: Drehachse
- 2b: Frontend
- 3: Rahmen
- 4: Seismische Masse
- 4a: Antriebsseite
- 4b: Koppelseite
- 4c: Schwungring
- 5: Elektrische Maschine
- 6: Stator
- 7: Rotor
- 8: Getriebe
- 8a: Getriebeeingang
- 8b: Getriebeausgang
- 8c: Zwischenstufe
- 8d: Ausgangswelle
- 8e: Koppelabschnitt
- 9: Gehäuse
- 10: Federeinheit
- 11: Steuergerät
- 12: Steuereinrichtung
- 13: Motorsteuerung
- 14: Regeleinheit
- 15: Messeinrichtung
- 16: Motorsteuergerät
- 17: Regeleinrichtung
- 18: Pumpe
- 18a: Einlass
- 18b: Auslass
- 19: Aktuatoreinrichtung
- 19a: Einlass
- 19b: Auslass
- 20: Generator
- 20a: Rotor
- 20b: Stator
- 21: Motor
- 21a: Rotor
- 21b: Stator
- 22: Verbindung
- 23, 24: Verbindung
- 80: Eingangsrad
- 81, 82: Zwischenrad
- 83: Ausgangsrad
- 84: Zwischenwelle
- n: Drehbewegung
- S1...3: Verfahrensschritt

## Patentansprüche

1. Aktuatoranordnung (1) zum Aufbringen eines Drehmoments auf eine Welle (2) einer Maschine zum Dämpfen von Drehschwingungen der Welle, wobei die Welle (2) eine Kurbelwelle einer Hubkolbenmaschine ist, mit zumindest folgenden Merkmalen:
a) mindestens eine Aktuatoreinrichtung (19) zum Aufbringen des Drehmoments auf die Welle (2),
b) mindestens eine mit der Welle (2) gekoppelte, drehbare seismische Masse (4),
c) wobei die mindestens eine Aktuatoreinrichtung (19) zum Aufbringen des Drehmoments zwischen der seismischen Masse (4) und der Welle (2) ausgelegt ist, und wobei die mindestens eine Aktuatoreinrichtung (19) eine Kopplung der seismischen Masse (4) mit der Welle bildet,
d) wobei die Aktuatoranordnung (1) mindestens eine elektrische Maschine (5) zur Bereitstellung von Antriebsenergie für die mindestens eine Aktuatoreinrichtung (19) aufweist,
e) wobei die Aktuatoranordnung (1) mindestens ein Getriebe (8) aufweist, durch welches die mindestens eine Aktuatoreinrichtung (19) für ihren Antrieb mit der mindestens einen elektrischen Maschine (5) gekoppelt ist,
f) wobei die mindestens eine elektrische Maschine (5) als ein Elektromotor mit einem Stator (6) und einem Rotor (7) ausgebildet ist, wobei der Stator (6) fest an einem Rahmen (3) angebracht und der Rotor (7) mit der mindestens einen Aktuatoreinrichtung (19) mittelbar durch das Getriebe (8) oder unmittelbar gekoppelt ist,
g) wobei das mindestens eine Getriebe (8) und die mindestens eine Aktuatoreinrichtung (19) an der mindestens einen seismischen Masse (4) angeordnet sind,
h) wobei die Aktuatoranordnung (1) mindestens ein Steuergerät (11) zur Steuerung der elektrischen Maschine (5) aufweist,
i) wobei die Aktuatoranordnung (1) mindestens eine Messeinrichtung (15) zur Erfassung von Drehschwingungsinformationen der Welle (2) aufweist, und
j) wobei das Steuergerät (11) zur Steuerung der elektrischen Maschine (5) anhand der durch die Messeinrichtung (15) erfassten Drehschwingungsinformationen der Welle (2) zum Aufbringen des Drehmoments zur Dämpfung von Drehschwingungen der Welle (2) ausgebildet ist.

2. Aktuatoranordnung (1) nach Anspruch 1, **dadurch gekennzeichnet, dass** die Aktuatoranordnung (1) zum Aufbringen eines wechselnden Drehmoments auf die Welle (2) ausgebildet ist.

3. Aktuatoranordnung (1) nach einem der Ansprüche 1 bis 2, **dadurch gekennzeichnet, dass** die drehbare seismische Masse (4) derart mit der Welle (2) gekoppelt ist, dass sie mit einer gleichen Drehzahl rotieren oder dass sie mit einer verschiedenen Drehzahl als die Welle (2) rotieren.

4. Aktuatoranordnung (1) nach einem der vorstehenden Ansprüvche, **dadurch gekennzeichnet, dass** das Getriebe (8) ein Gehäuse (9) aufweist, welches mit der seismischen Masse (4) fest verbunden ist.

5. Aktuatoranordnung (1) nach einem der vorstehenen Ansprüche, **dadurch gekennzeichnet, dass** die drehbare seismische Masse (4) und die elektrische Maschine (5) zusammen mit der Welle (2) eine gleiche Drehachse (2a) aufweisen.

6. Aktuatoranordnung (1) nach einem der vorstehenden Ansprüche, **dadurch gekennzeichnet, dass** wobei die mindestens eine elektrische Maschine (5) als ein Elektromotor für eine Drehzahl von ± 16 000 U/min ausgebildet ist.

7. Aktuatoranordnung (1) nach einem der Ansprüche 1 bis 5, **dadurch gekennzeichnet, dass** das Getriebe (8) ein Zahnradgetriebe ist, wobei die mindestens eine Aktuatoreinrichtung (19) durch ein Ausgangsrad (83) des Getriebes (8) gebildet ist, und wobei ein Getriebeeingang (8a) mit dem Rotor (7) der mindestens einen elektrischen Maschine (5) gekoppelt ist.

8. Aktuatoranordnung (1) nach einem der Ansprüche 1 bis 6, **dadurch gekennzeichnet, dass** das Getriebe (8) mindestens einen Generator (20) und mindestens einen elektrischen Motor (21) aufweist, wobei der mindestens eine elektrische Motor (21) die mindestens eine Aktuatoreinrichtung (19) bildet, und wobei der mindestens eine Generator (20) mit dem Rotor (7) der mindestens einen elektrischen Maschine (5) gekoppelt ist.

9. Aktuatoranordnung (1) nach einem der Ansprüche 1 bis 6, **dadurch gekennzeichnet, dass** das Getriebe (8) mindestens eine Pumpe (18), die als Hydraulikpumpe, insbesondere als Zahnradpumpe, ausgebildet ist, und die mindestens eine Aktuatoreinrichtung (19) aufweist, wobei die Pumpe (18) mit dem Rotor (7) der mindestens einen elektrischen Maschine (5) gekoppelt ist, und wobei die mindestens eine Aktuatoreinrichtung (19) als ein radial angeordneter Hydraulikzylinder der Pumpe (18), als Verdrängerflügel oder als Zahnradpumpe ausgebildet ist.

10. Aktuatoranordnung (1) nach einem der Ansprüche 1 bis 6, **dadurch gekennzeichnet, dass** das Getriebe (8) mindestens einen Generator (20) und die mindestens eine Aktuatoreinrichtung (19) aufweist, wobei die mindestens eine Aktuatoreinrichtung (19) ein oder mehrere Piezoelemente bzw. Piezoaktuatoren aufweist, wobei der mindestens eine Generator zur Energieversorgung des einen oder der mehreren Piezoelemente vorgesehen und mit dem Rotor (7) der mindestens einen elektrischen Maschine (5) gekoppelt ist.

11. Aktuatoranordnung (1) nach einem der vorhergehenden Ansprüche, **dadurch gekennzeichnet, dass** die mindestens eine drehbare seismische Masse (4) weiterhin über eine Federeinheit (10) mit der Welle (2) gekoppelt ist, wobei die Federeinheit (10) vorzugsweise parallel geschaltete Federn, wie z.B. Drehfedern, oder am Umfang verteilte Schraubenfedern aufweist.

12. Aktuatoranordnung (1) nach einem der vorhergehenden Ansprüche, **dadurch gekennzeichnet, dass** die Aktuatoranordnung (1) eine Einrichtung zum Bremsen der Welle (2) aufweist und/oder dass die Aktuatoranordnung (1) eine Einrichtung zum Beschleunigen der Welle (2) aufweist, wobei die mindestens eine elektrische Maschine (5) Beschleunigungsvorgänge erzeugt.

13. Aktuatoranordnung (1) nach Anspruch 12, **dadurch gekennzeichnet, dass** die Einrichtung zum Bremsen der Welle (2) die mindestens eine elektrische Maschine (5) zur Energierückgewinnung umfasst.

14. Aktuatoranordnung (1) nach einem der vorhergehenden Ansprüche, **dadurch gekennzeichnet, dass** das Steuergerät (11) der Aktuatoranordnung (1) vorzugsweise eine Regeleinheit (14) zur Bereitstellung einer überlagerten Drehgeschwindigkeitsregelung der seismischen Masse (4) aufweist.

15. Verfahren zum Aufbringen eines Drehmoments auf eine Welle (2) einer Maschine, die eine Kurbelwelle einer Hubkolbenmaschine ist, mit einer Aktuatoranordnung (1) nach einem der vorhergehenden Ansprüche, mit folgenden Verfahrensschritten:
(S1) Erfassen einer Drehmomentanforderung;
(S2) Bestimmen von Ansteuerungsdaten für die mindestens eine elektrische Maschine (5) anhand der erfassten Drehmomentanforderung; und
(S3) Aufbringen des Drehmoments auf die Welle (2) durch Ansteuern der mindestens einen elektrischen Maschine (5) zum Antreiben der mindestens einen Aktuatoreinrichtung (19),
- wobei zum aktiven Dämpfen von Drehschwingungen der Welle (2) der Maschine in dem Verfahrensschritt (S1) weiter ein Erfassen von Drehschwingungsinformationen der Welle (2) mit mindestens einer Messeinrichtung (15) erfolgt, und wobei im Verfahrensschritt (S1) weiter ein gleichzeitiges Übernehmen von zusätzlichen Informationen von einer Motorsteuerung (16) der zuzuordnenden Maschine erfolgt,
- wobei in dem Verfahrensschritt (S2) weiter ein Bestimmen von Ansteuerungsdaten für die mindestens eine elektrische Maschine (5) anhand der erfassten Eingangsdaten erfolgt, und
- wobei in dem Verfahrensschritt (S3) weiter ein aktives Dämpfen der Drehschwingungen der Welle (2) durch Ansteuern der mindestens einen elektrischen Maschine (5) zum Antreiben der mindestens einen Aktuatoreinrichtung (19) anhand der so bestimmten Ansteuierungsdaten erfolgt, und wobei weiter im Verfahrensschritt (S3) ein Drehmoment zum Aufbringen auf die Welle (2) zwischen der Welle (2) und der sich mit der Welle (2) mitdrehenden seismischen Masse (4) von der mindestens einen Aktuatoreinrichtung (19) durch relatives Beschleunigen zwischen der seismischen Masse (4) und der Welle (2) erzeugt wird.

## Claims

1. An actuator arrangement (1) for applying a torque to a shaft (2) of a machine for the damping of rotational vibrations of the shaft, the shaft (2) being a crank shaft of a reciprocating piston machine, having at least the following features:
a) at least one actuator device (19) for applying the torque to the shaft (2),
b) at least one rotatable seismic mass (4) coupled to the shaft (2),
c) the at least one actuator device (19) being designed to apply the torque between the seismic mass (4) and the shaft (2) and the at least one actuator device (19) forming a coupling between the seismic mass (4) and the shaft,
d) the actuator arrangement (1) having at least one electrical machine (5) for the provision of drive energy for the at least one actuator device (19),
e) the actuator arrangement (1) having at least one transmission (8) by means of which the at least one actuator device (19) is coupled to the at least one electrical machine in order to drive it (8),
f) the at least one electrical machine (5) being designed as an electric motor having a stator (6) and a rotor (7), the stator (6) being mounted in a fixed manner on a frame (3) and the rotor (7) being coupled to the at least one actuator device (19) either indirectly via the transmission (8) or indirectly,
g) the at least one transmission (8) and the at least one actuator device (19) being arranged on the at least one seismic mass (4),
h) the actuator arrangement (1) having at least one controller (11) for controlling the electrical machine (5),
i) the actuator arrangement (1) having at least one measuring device (15) for gathering rotary vibration data relating to the shaft (2), and
j) the controller (11) being designed to control the electrical machine (5) on the basis of the gathered rotary vibration data relating to the shaft (2) in order to apply the torque to damp rotary vibrations of the shaft (2).

2. An actuator arrangement (1) according to claim 1, **characterised in that** the actuator arrangement (1) is designed to apply an alternating torque to the shaft (2).

3. An actuator arrangement (1) according to any one of claims 1 to 2, **characterised in that** the rotatable seismic mass (4) is coupled to the shaft (2) in such a manner that they either both rotate at a same speed or that the rotatable seismic mass (4) rotates at a different speed than the shaft (2).

4. An actuator arrangement (1) according to any one of the preceding claims, **characterised in that** the transmission (8) has a housing (9) that is connected in a fixed manner to the seismic mass (4).

5. An actuator arrangement (1) according to any one of the preceding claims, **characterised in that** the rotatable seismic mass (4) and the electrical machine (5) together with the shaft (2) have the same axis of rotation (2a).

6. An actuator arrangement (1) according to any one of the preceding claims, **characterised in that** the at least one electrical machine (5) takes the form of an electric motor for a speed of ± 16,000 rpm.

7. An actuator arrangement (1) according to any one of claims 1 to 5, **characterised in that** the transmission (8) is a gear transmission, the at least one actuator device (19) taking the form of an output gear (83) of the transmission (8) and a transmission input (8a) being coupled to the rotor (7) of the at least one electrical machine (5).

8. An actuator arrangement (1) according to any one of claims 1 to 6, **characterised in that** the transmission (8) has at least one generator (20) and at least one electric motor (21), the at least one electric motor (21) forming the at least one actuator device (19) and the at least one generator (20) being coupled to the rotor (7) of the at least one electrical machine (5).

9. An actuator arrangement (1) according to any one of claims 1 to 6, **characterised in that** the transmission (8) has at least one pump (18), which takes the form of a hydraulic pump, particularly a gear pump, and the at least one actuator device (19), the pump (18) being coupled to the rotor (7) of the at least one electrical machine (5) and the at least one actuator device (19) taking the form of a radially disposed hydraulic cylinder of the pump (18), a displacement vane or a gear pump.

10. An actuator arrangement (1) according to any one of claims 1 to 6, **characterised in that** the transmission (8) has at least one generator (20) and the at least one actuator device (19), the at least one actuator device (19) having one or more piezo elements or piezo actuators, the at least one generator being provided to supply energy to the one or more piezo elements and being coupled to the rotor (7) of the at least one electrical machine (5).

11. An actuator arrangement (1) according to any one of the preceding claims, **characterised in that** the at least one rotatable seismic mass (4) is in addition coupled via a spring unit (10) to the shaft (2), the spring unit (10) preferably having springs connected in parallel, such as torsion springs or circumferentially arranged helical springs, for example.

12. An actuator arrangement (1) according to any one of the preceding claims, **characterised in that** the actuator arrangement (1) has a device for braking the shaft (2) and/or that the actuator arrangement (1) has a device for accelerating the shaft (2), the at least one electrical machine generating acceleration processes.

13. An actuator arrangement (1) according to claim 12, **characterised in that** the device for braking the shaft (2) comprises the at least one electrical machine (5) for energy recovery.

14. An actuator arrangement (1) according to any one of the preceding claims, **characterised in that** the controller (11) of the actuator arrangement (1) preferably has a regulating unit (14) providing a superimposed rotating speed regulation of the seismic mass (4).

15. A method for applying a torque to a machine shaft (2), which is a crankshaft of a reciprocating piston machine, with an actuator arrangement (1) according to any one of the preceding claims and having the following method steps:
(S1) the detection of a requirement for torque;
(S2) the determination of actuation data for the at least one electrical machine (5) on the basis of the requirement for torque detected; and
(S3) the application of the torque to the shaft (2) by actuating the at least one electrical machine (5) to drive the at least one actuator device (19),
- in addition, rotary vibration information relating to the shaft (2) being gathered by at least one measuring device (15) in method step (S1) in order to actively damp rotary vibrations of the shaft (2) of the machine and, in addition, additional information being simultaneously received by an engine control system (16) of the associated machine in method step (S1),
- in addition, actuation data being determined for the at least one electrical machine (5) on the basis of the input data gathered in method step (S2), and
- in addition, active damping of the rotary vibrations of the shaft (2) being performed by actuating the at least one electrical machine (5) in method step (S3) in order to drive the at least one actuator device (19) on the basis of the control data thus determined and, in addition, a torque to be applied to the shaft (2) between the shaft (2) and the seismic mass (4) that co-rotates with the shaft (2) being generated by the at least one actuator device (19) by relative acceleration between the seismic mass (4) and the shaft (2) in method step (S3).

## Revendications

1. Système (1) d'actionnement pour appliquer un couple à un arbre (2) d'une machine, afin d'amortir des oscillations de torsion de l'arbre, l'arbre (2) étant un vilebrequin d'un moteur à piston à mouvement alternatif, ayant au moins les caractéristiques suivantes :
a) au moins un dispositif (19) d'actionnement pour appliquer le couple de rotation à l'arbre (2),
b) au moins une masse (4) sismique tournante et accouplée à l'arbre (2),
c) dans lequel le au moins un dispositif (19) d'actionnement est conçu pour appliquer le couple entre la masse (4) sismique et l'arbre (2), et
dans lequel le au moins un dispositif (19) d'actionnement forme un accouplement de la masse (4) sismique à l'arbre,
d) dans lequel le système (1) d'actionnement a au moins une machine (5) électrique pour disposer d'énergie d'entraînement du au moins un dispositif (19) d'actionnement,
e) dans lequel le système (1) d'actionnement a au moins une transmission (8), par laquelle le au moins un dispositif (19) d'actionnement est, pour son entraînement, accouplé à la au moins une machine (5) électrique,
f) dans lequel la au moins une machine (5) électrique est constituée en moteur électrique ayant un stator (6) et un rotor (7), le stator (6) étant monté fixe sur un bâti (3) et le rotor (7) étant accouplé au au moins un dispositif (19) d'actionnement, indirectement par la transmission (8) ou directement,
g) dans lequel la au moins une transmission (8) et le au moins un dispositif (19) d'actionnement sont montés sur la au moins une masse (4) sismique,
h) dans lequel le système (1) d'actionnement a au moins un appareil (11) de commande pour commander la machine (5) électrique,
i) dans lequel le système (1) d'actionnement a au moins un dispositif (15) de mesure pour relever des informations d'oscillation de torsion de l'arbre (2), et
j) dans lequel l'appareil (11) de commande pour commander la machine (5) électrique est constitué pour appliquer le couple pour amortir des oscillations de torsion de l'arbre (2) à l'aide des informations d'oscillations de torsion, relevées par le dispositif (15) de mesure, de l'arbre (2).

2. Système (1) d'actionnement suivant la revendication 1, **caractérisé en ce que** le système (1) d'actionnement est constitué pour appliquer un couple alternatif à l'arbre (2).

3. Système (1) d'actionnement suivant l'une des revendications 1 à 2, **caractérisé en ce que** la masse (4) sismique tournante est accouplée à l'arbre (2), de manière à ce qu'elle tourne à une même vitesse de rotation ou à ce qu'elle tourne à une vitesse différente de celle de l'arbre (2).

4. Système (1) d'actionnement suivant l'une des revendications précédentes, **caractérisé en ce que** la transmission (8) a un carter (9), qui est relié fixement à la masse (4) sismique.

5. Système (1) d'actionnement suivant l'une des revendications précédentes, **caractérisé en ce que** la masse (4) sismique tournante et la machine (5) électrique ont, ensemble avec l'arbre (2), un même axe (2a) de rotation.

6. Système (1) d'actionnement suivant l'une des revendications précédentes, **caractérisé en ce que** la au moins une machine (5) électrique est constituée sous la forme d'un moteur électrique pour une vitesse de rotation de plus + 16 000 tours/minute.

7. Système (1) d'actionnement suivant l'une des revendications là 5, **caractérisé en ce que** la transmission (8) est une transmission à engrenage, le au moins un dispositif (19) d'actionnement étant formé par une roue (83) de sortie de la transmission (8) et dans lequel une entrée (8a) de la transmission est accouplée au rotor (7) de la au moins une machine (5) électrique.

8. Système (1) d'actionnement suivant l'une des revendications 1 à 6, **caractérisé en ce que** la transmission (8) a au moins une génératrice (20) et au moins un moteur (21) électrique, le au moins un moteur (21) électrique formant le au moins un dispositif (19) d'actionnement et la au moins une génératrice (20) étant accouplée au rotor (7) de la au moins une machine (5) électrique.

9. Système (1) d'actionnement suivant l'une des revendications 1 à 6, **caractérisé en ce que** la transmission (8) a au moins une pompe (18), constituée en pompe hydraulique, notamment en pompe à engrenage, et le au moins un dispositif (19) d'actionnement, la pompe (18) étant accouplée au rotor (7) de la au moins une machine (5) électrique, et le au moins un dispositif (19) d'actionnement étant constitué sous la forme d'un cylindre hydraulique disposé radialement de la pompe (18), comme aile de refoulement ou comme pompe à engrenage.

10. Système (1) d'actionnement suivant l'une des revendications 1 à 6, **caractérisé en ce que** la transmission (8) a au moins une génératrice (20) et le au moins un dispositif (19) d'actionnement, le au moins un dispositif (19) d'actionnement ayant un ou plusieurs éléments piézoélectriques ou actionneurs piézoélectriques, la au moins une génératrice étant prévue pour l'alimentation en énergie du un ou des plusieurs éléments piézoélectriques et étant accouplée au rotor (7) de la au moins une machine (5) électrique.

11. Système (1) d'actionnement suivant l'une des revendications précédentes, **caractérisé en ce que** la au moins une masse (4) sismique tournante est accouplée, en outre, à l'arbre (2) par une unité (10) à ressort, l'unité (10) à ressort ayant des ressorts, montés de préférence en parallèle, comme, par exemple, des ressorts de torsion, ou de ressorts hélicoïdaux répartis sur le pourtour.

12. Système (1) d'actionnement suivant l'une des revendications précédentes, **caractérisé en ce que** le système (1) d'actionnement a un dispositif de freinage de l'arbre (2) et/ou **en ce que** le dispositif (1) d'actionnement a un dispositif d'accélération de l'arbre (2), la au moins une machine (5) électrique produisant des processus d'accélération.

13. Système (1) d'actionnement suivant la revendication 12, **caractérisé en ce que** le dispositif de freinage de l'arbre (2) comprend la au moins une machine (5) électrique pour récupérer de l'énergie.

14. Système (1) d'actionnement suivant l'une des revendications précédentes, **caractérisé en ce que** l'appareil (11) de commande du système (1) d'actionnement a, de préférence, une unité (14) de réglage pour disposer d'une régulation superposée de la vitesse de rotation de la masse (4) sismique.

15. Procédé pour appliquer un couple à un arbre (2) d'une machine, qui est un vilebrequin d'un moteur à piston à mouvement alternatif, comprenant un système (1) d'actionnement suivant l'une des revendications précédentes, comprenant les stades de procédé suivants :
(S1) détection d'une demande de couple ;
(S2) détermination de données de commande de la au moins une machine (5) électrique à l'aide de la demande de couple, qui a été détectée ; et
(S3) Application du couple à l'arbre (2) par commande de la au moins une machine (5) électrique pour entraîner le au moins un dispositif (19) d'actionnement,
- dans lequel, pour amortir activement des oscillations de torsion de l'arbre (2) de la machine, dans le stade (S1) de procédé, il est effectué, en outre, une détection d'informations d'oscillations de torsion de l'arbre (2) par au moins un dispositif (15) de mesure, et dans lequel, dans le stade (S1) du procédé, il est effectué, en outre, une prise en charge simultanée d'informations supplémentaires d'une commande (16) de moteur de la machine associée,
- dans lequel, dans le stade (S2) du procédé, il est effectué, en outre, une détermination de données de commande de la au moins une machine (5) électrique à l'aide des données d'entrée détectées, et
- dans lequel, dans le stade (S3) du procédé, il est effectué, en outre, un amortissement actif des oscillations de torsion de l'arbre (2), en commandant la au moins une machine (5) électrique pour entraîner le au moins un dispositif (19) d'actionnement à l'aide des données d'actionnement ainsi déterminées, et dans lequel, en outre, dans le stade (S3) du procédé, il est produit un couple à appliquer à l'arbre, entre l'arbre (2) et la masse (4) sismique tourant avec l'arbre (2), par le au moins un dispositif (19) d'actionnement, par accélération relative entre la masse (4) sismique et l'arbre (2).
